# EUROPEAN PATENT APPLICATION

(11) **EP 2 312 464 A1**
(43) Date of publication of application: **20.04.2011**
(21) Application number: 09368039.5
(22) Date of filing: 14.10.2009
(51) Int. Cl.: G06F 17/30

(54) **Method of and apparatus for operating on data in a distributed client-server architecture comprising heterogeneous platforms**

(71) Applicant: Amadeus S.A.S., 06410 Biot (FR)
(72) Inventor: Gole, Rémy, 06130 Grasse (FR); Huard, Lénaic, 06560 Valbonne (FR); Etienne, Julien, 06620 Cipières (FR)
(74) Representative: Coret, Sophie V.G.A.

(57) **Abstract**

A method of storing data in computer apparatus, the method comprising: marshalling data to provide encoded data; compressing the data; and storing the compressed, encoded data in a cache of the computer apparatus.

## Description

### Field of the invention

The present invention relates to a method of operating on data in computer apparatus and computer apparatus that is operative on data, in particular but not exclusively in a distributed client-server architecture.

### Background to the invention

The client-server architecture that emerged in the late 1980s provides for usability, flexibility, interoperability and scalability compared to the longer used centralised, time sharing mainframe architecture. In a client-server architecture, a client is a requester of services and the server is the provider of the requested services.

The client-server architecture has progressively replaced the mainframe architecture in which all processing capability resided in the mainframe or host computer and in which users interacted with the host computer by means of a dumb terminal that captured a user's keystrokes and forwarded the keystroke information to the host. A significant weakness of the mainframe architecture is the lack of ease with which it supports Graphical User Interfaces (GUIs) and access to databases at geographically dispersed sites. Nevertheless, mainframe computers still find application in the role of powerful servers in client-server architectures.

In a form, the client-server architecture comprises a database server that functions as a file server. In this form of architecture, user (i.e. client) queries are answered directly by means of a relational database management system (RDBMS). Network traffic is reduced by providing a query response rather than transferring complete files. This form of architecture also improves multi-user updating through a GUI at each client to a shared database server. Structured Query Language (SQL) statements are typically used for the exchange of data between clients and the server.

It is known to use a cache in computer apparatus to improve performance. A cache is a store of data that duplicates original data stored elsewhere or computed earlier where the original data has a comparatively slow fetch time or is comparatively burdensome to re-compute compared to reading the data from the cache. Hence, a cache is temporary data storage where frequently accessed data is stored for comparatively fast access. In a typical client-server architecture, each client comprises a local cache and the server comprises a server cache. Following a user query, data is sought in the local cache and if the data is absent from the local cache, the data is requested from the server cache. If the data is present in the server cache, the data is conveyed to the client. If, on the other hand, the data is absent from the server cache, the data is either fetched from a database or formed by computation and conveyed to the client. Such newly fetched or formed data is typically stored in the server cache.

Airline reservation companies typically make use of large and widely geographically distributed client-server architectures to serve their customers, i.e. travel agencies located world-wide. Such distributed client-server architectures are typically required to provide up-to-date data of a heterogeneous nature on a network wide basis. Such data may include air fares, seat availabilities and booking processing rules. In view of the nature of such operations and data, distributed client-server architectures used by airline reservation companies normally make intensive use of server and local caches. To take account of the heterogeneous nature of typical distributed client apparatus, data fetched from the server cache is encoded to provide data of a platform independent form before being conveyed over the network to the client where the data is decoded to a form that may be operated upon by the client. WO 2007/039535 (to the present applicant) describes encoding of data to provide platform independence in a distributed client-server architecture of a heterogeneous nature.

### Object of the invention

The present inventors have appreciated that the present approach to fetching data from a server cache for conveyance over a network to a client apparatus has shortcomings. It is therefore an object for the present invention to provide a method of operating on data in computer apparatus and computer apparatus that is operative on data to provide for improved conveyance of cache stored data over a communications channel.

It is a further object for the present invention to provide a method of operating on data and computer apparatus that is operative on data to provide for improved conveyance of cache stored data from one computer apparatus, such as a server, to another computer apparatus, such as a client, in a distributed client-server architecture.

### Statement of invention

The present invention has been devised in the light of the inventors' appreciation. According to a first aspect of the present invention, there is provided a method of storing data in computer apparatus, the method comprising:
marshalling data to provide encoded data;
compressing the data; and
storing the compressed, encoded data in a cache of the computer apparatus.

In use, the data, such as an object, is marshalled and compressed before being stored in the cache. When the cache stored data is fetched it is in a form that is, for example, ready and suitable to be conveyed over a network. In contrast and according to known approaches, data is compressed before being stored in the cache. After being fetched from the cache the data is marshalled before being conveyed over a network. Performing marshalling on each fetched block of data before conveyance over a network can present a bottleneck, in particular where there are intensive fetching operations, such as in distributed client-server architectures of the kind used by airline reservation companies. Having already marshalled and compressed data according to the present invention may provide for faster processing and conveyance of cache stored data.

More specifically, the step of marshalling the data may comprise providing encoded data in a form that is suitable for transmission over a network. The encoded data may be platform independent. For example, the encoded data may be at least one of operating system independent and transport layer independent. Hence, the method may be used in a distributed client-server architecture having a server and client apparatus with different architectures. The marshalling step may increase the size of the data. However, the compression step may at least reduce the data size increasing effect of the marshalling step if not provide a data size that is smaller than that of the data before marshalling.

Alternatively or in addition, the step of compressing the data may be performed after the step of marshalling data.

Alternatively or in addition, the encoded data may use implicit typing. Alternatively or in addition, the step of marshalling data may comprise encoding text data and binary data.

Alternatively or in addition, the step of marshalling data may comprise marshalling data in accordance with at least one of: the external Data Representation (XDR) standard; the EDIFACT standard; the extensible Markup Language (XML) format; the JSON format; and the Action Message Format (AMF).

Alternatively or in addition, the method may further comprise comparing the size of the data with a predetermined data size and performing the steps of marshalling and compression only if the size of the data is greater than the predetermined data size. Where the data size is smaller than the predetermined data size the data may be handled according to known approaches, for example, the data may be stored as is, i.e. in an uncompressed form, on the cache or the data may be compressed before being stored on the cache.

Alternatively or in addition, the method may further comprise the step of fetching data from computer storage, such as a database with a comparatively long fetch time, before the data is marshalled and compressed.

Alternatively or in addition, the method may further comprise: conveying the compressed, encoded data from the cache over a communications channel, such as a computer network; uncompressing the conveyed data; and un-marshalling the conveyed data. Conveying the compressed, encoded data may comprise the use of at least one Remote Procedure Call (RPC). The step of uncompressing the conveyed data may be performed before the step of un-marshalling the conveyed data. The uncompressed, un-marshalled data may be stored on another cache. The cache storing the compressed, un-marshalled (i.e. decoded) data may be formed in data storage comprised in a server of the computer apparatus. The cache storing the uncompressed, decoded data may be formed in data storage comprised in a client apparatus. The computer apparatus may comprise a server and a plurality of client apparatus, i.e. the computer apparatus may be comprised in a distributed client-server architecture. Therefore the method may comprise conveying the compressed, encoded data from the server cache to each of a plurality of client apparatus caches, e.g. more than fifty client apparatus caches.

According to a second aspect of the present invention, there is provided a computer program, which is at least one of embodied on a computer readable storage medium and carried on an electrical carrier signal, the computer program comprising computer executable code for causing computer apparatus to operate according to the first aspect of the present invention.

The computer readable storage medium may comprise at least one of a record medium, computer memory and read-only memory.

Further embodiments of the second aspect of the present invention may comprise one or more features of the first aspect of the present invention.

According to a third aspect of the present invention, there is provided computer apparatus comprising a cache, the computer apparatus being operative to marshal data to provide encoded data, to compress the data and to store the compressed, encoded data in the cache.

Embodiments of the third aspect of the present invention may comprise one or more features of any previous aspect of the present invention.

According to a fourth aspect of the present invention, there is provided a distributed client-server architecture comprising computer apparatus according to the third aspect of the present invention.

### Brief description of the drawings

The present invention will now be described by way of example only with reference to the following drawings, of which:
Figure 1 is a representation of a distributed client-server architecture having a cache that is operative to store data according to the present invention;
Figure 2 is a representation of a distributed client-server architecture that is operative to fetch data from the cache of Figure 1 and convey the data over a network;
Figure 3 is a flow chart representation of a method according to the present invention; and
Figure 4 is a representation that provides a basis for comparison of processing times according to a known approach and the approach of the present invention.

### Specific description

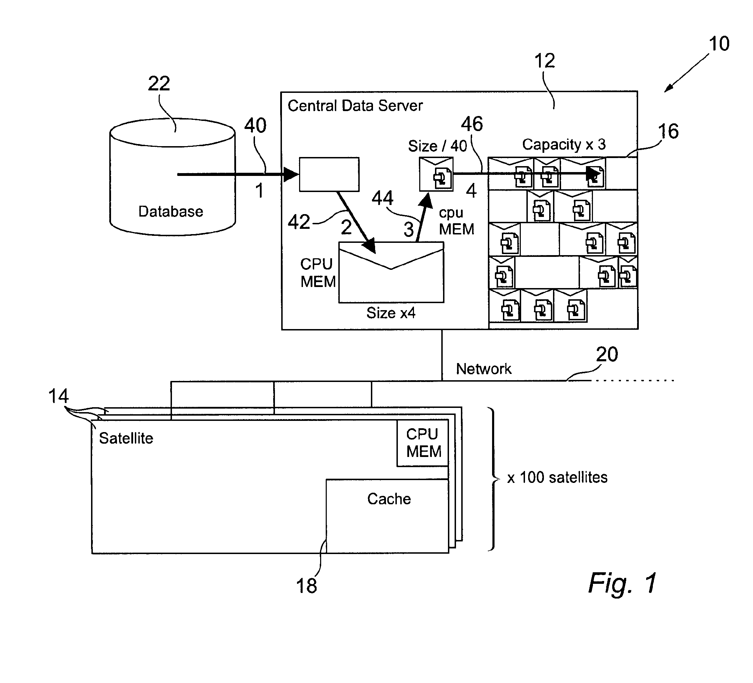

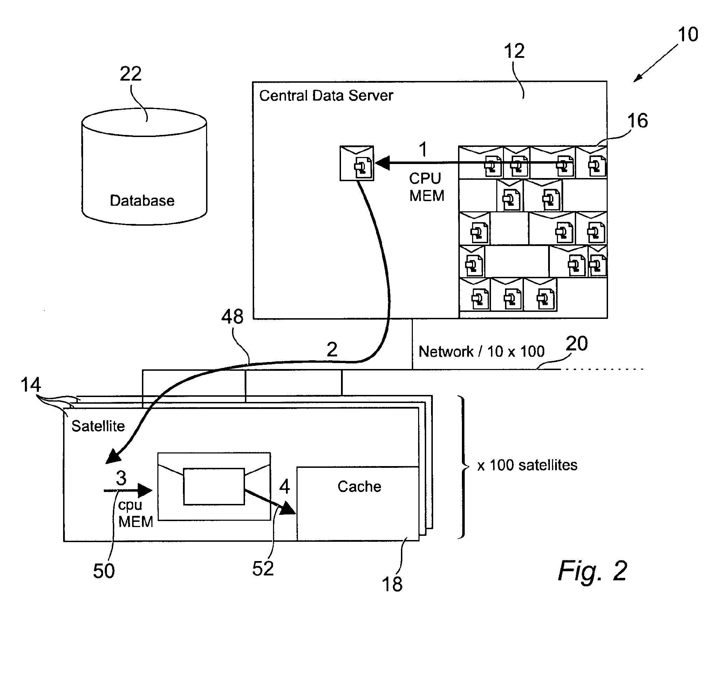

The distributed client-server architecture 10 of Figures 1 and 2 comprises a server 12 and a plurality of client apparatus 14. The server 12 is located at premises of an airline reservation company and each of the client apparatus 14 is located at a different travel agency. As is typical of a distributed client-server architecture for airline reservation companies, the server 12 and the client apparatus 14 are widely geographically dispersed. In the present example, the distributed client-server architecture 10 has one hundred client apparatus. The server comprises a server cache 16 and each of the plurality of client apparatus comprises a client cache 18. Each cache is formed in a data storage device having a fast access time, such as in the central processing unit (CPU) memory of the server or client apparatus. Communication between and amongst the server and the client apparatus is by means of a network 20 of known form and function. Otherwise, the server and the client apparatus are of known form and function. A database 22 is formed in data storage of significant capacity but comparatively slow access time, such as a disk drive or system of disk drives. The database 22 is located with or at least close to the server 12 and contains travel agency related data, such as air-fares, seat availabilities and booking processing rules. Such data is normally in the form of binary structures to provide for rapid processing.

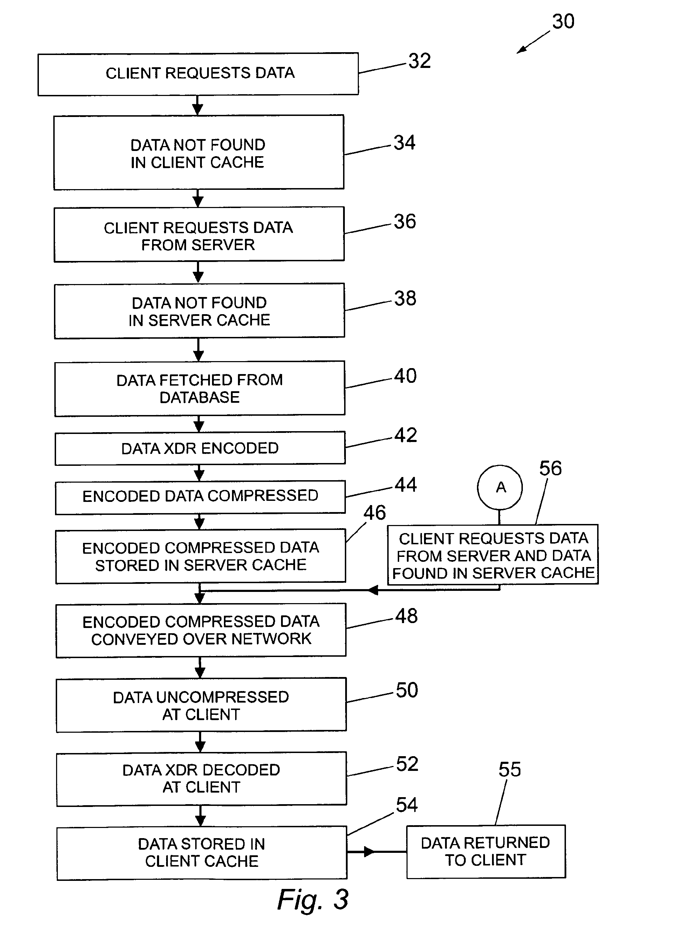

The operation of the distributed client-server architecture of Figures 1 and 2 will now be described with reference to the flow chart of Figure 3 and the representations of operations on data blocks shown in Figures 1 and 2. Flow chart steps present in Figure 3 that are shown in Figures 1 and 2 share the same reference numerals. As a first step, a client apparatus 14 requests specific data and looks for the specific data in the client cache 32. In the event that the data is absent from the client cache 34, the client apparatus requests the data from the server 36 using known approaches such as Remote Procedure Calls (RPCs). The data is sought in the server cache. In the event that the data is absent from the server cache 38, the data is fetched from the database 40. The size of the fetched data is compared with a predetermined data size. If the size of the fetched data is greater than the predetermined data size the fetched data is XDR encoded (which constitutes marshalling of data) 42 and compressed 44 in turn. XDR encoding may increase the size of the data by up to a maximum likely factor of four. Compression typically reduces the size of the data by a factor of forty. A known compression technique such as Run Length Encoding (RLE) is used to compress the XDR encoded data. The XDR encoded and compressed data is then stored in the server cache 46 for subsequent use and is conveyed over the network 48 to the client apparatus. If the size of the fetched data is less than the predetermined data size the fetched data is stored in the server cache without compression and XDR encoding and is conveyed over the network 48 to the client apparatus in accordance with the known approach of XDR encoding before being conveyed. At the client apparatus the data is uncompressed 50, if need be, and XDR decoded 52 before being stored in the client cache 54 and returned to the client 55 for operation upon by the client apparatus.

When another client apparatus requests the same data and the data is absent from the client cache, the client requests the data from the server and the data is found in and fetched from the server cache 56. The fetched data is already compressed and XDR encoded therefore there is no need for compression and XDR encoding of the data before the data is conveyed over the network to the client apparatus 48 for uncompression 50 and XDR decoding 52 before the data is stored in the client cache 54 and operated upon by the client apparatus.

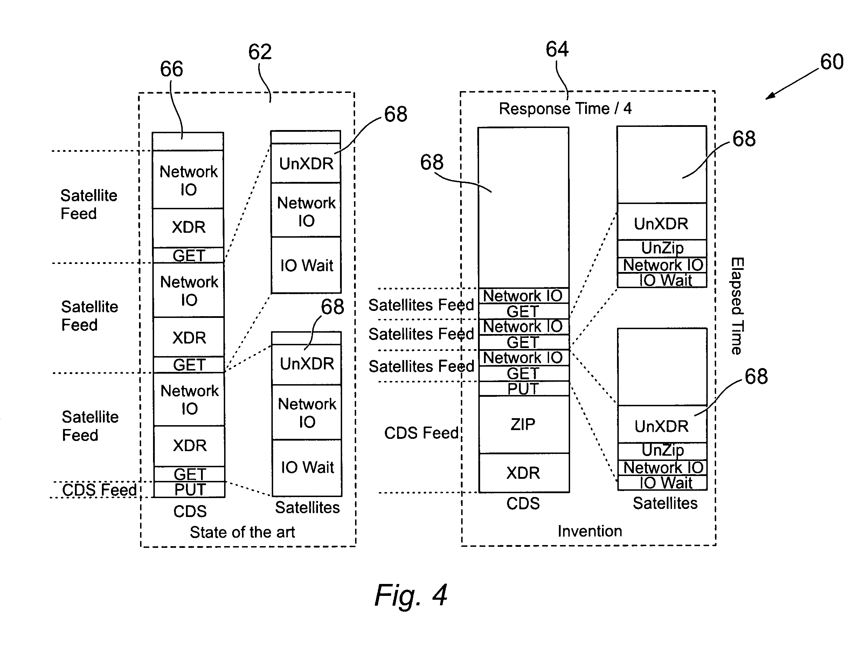

A basis for comparison of processing times according to the known approach and the approach of the present invention 60 is provided by Figure 4. The left hand chart of Figure 4 shows the time taken to execute procedures in the server and client apparatus according to the known approach 62. According to the known approach data is stored in the server cache without XDR encoding and without compression. The right hand chart of Figure 4 shows the time taken to execute procedures in the server and client apparatus according to the present invention 64. In each of the left and right charts, server procedures are shown in a left hand column 66 and client procedures are shown in right hand columns 68. In Figure 4 the term 'satellite' means client and the term 'CDS' means server. Individual procedures are shown as blocks within a column. For example, a network input/output operation is indicated by the legend 'Network 10', XDR encoding is indicated by the legend 'XDR' and compression is indicated by the legend 'Zip'. The height of each procedure block reflects the length of time required for its execution. Hence, a total height of blocks in a server or client column reflects the total amount of time involved in completing a server side or client side fetch operation. As can be seen from Figure 4, the present invention provides a significant reduction in the time to complete fetch operations with the execution time being reduced by a factor of four.

Application of the present invention is particularly advantageous in distributed client-server architectures that involve a high number of transactions, e.g. more than 1500 transactions per second, and in which a large number of cached data blocks are fetched each transaction, e.g. more than 10,000 data blocks. The present invention provides for improved performance in several respects. Firstly, memory requirements for the server cache are reduced because compressed data uses less space than uncompressed data. Also, network bandwidth requirements are reduced because data is conveyed between the server and client apparatus in a compressed form with transfer time and network capacity being thereby improved. Moreover, performing XDR encoding on server cache stored data reduces the processing burden on the server and increases the transfer time between the server and the client apparatus, as will be evident from consideration of Table 1 below. Use of the present application has been found to provide: a 30% server CPU usage reduction; a reduction in the network bandwidth by a factor of six; and an increase by a factor of three in the effective capacity of the server cache.

Table 1 provides a summary of the various processing circumstances that arise during operation of the distributed client-server architecture of Figures 1 and 2. The processing circumstances are: data absent from client and server caches; data absent from client cache and present in server cache; and data present in client cache. ZIP and UnZIP in Table 1 refer to compression and uncompression respectively.

**Table 1**

| Circumstance | Prior art | | Invention | |
|---|---|---|---|---|
| | Percentage of the total number of data fetches | CPU consuming tasks performed | CPU consuming tasks performed | Percentage of the total number of data fetches |
| Absent from client and server caches | 0.2 x 1.7 % ≈ 0.0034 % | XDR on server | XDR and ZIP on server | << 0.2 x 1.7 % << 0.0034 % |
| | | deXDR on client | DeXDR and UnZIP on client | |
| Absent from client cache and present in server cache | 0.2 x 98.3 % ≈ 0.2 % | XDR on server | | >> 0.2 x 98.3 % >> 0.2 % |
| | | deXDR on client | DeXDR and UnZIP on client | |
| Present in client cache | 99.8% | | | 99.8% |

As can be seen from Table 1, data is present in the client cache in 99.8% of all requests for data, data is present in the server cache in about 0.2% of all requests for data and data is absent from both server and client caches in 0.0034% of all requests for data. Application of the present invention means that XDR encoding is performed in 0.0034% of all requests for data instead of being performed in 0.2% plus 0.0034% of all requests for data. Therefore it can be appreciated that the present invention provides for a significant saving in server processing operations and on the time involved in fetching data from the server cache.

## Claims

1. A method of storing data in computer apparatus, the method comprising:
marshalling data to provide encoded data;
compressing the data; and
storing the compressed, encoded data in a cache of the computer apparatus.

2. The method according to claim 1, in which the step of marshalling the data comprises providing encoded data in a form that is suitable for transmission over a network.

3. The method according to claim 1 or 2, in which the encoded data is at least one of operating system independent and transport layer independent.

4. The method according to any preceding claim, in which the step of compressing the data is performed after the step of marshalling data.

5. The method according to any preceding claim, in which the step of marshalling data comprises marshalling data in accordance with at least one of: the eXternal Data Representation (XDR) standard; the EDIFACT standard; the eXtensible Markup Language (XML) format; the JSON format; and the Action Message Format (AMF).

6. The method according to any preceding claim further comprising comparing the size of the data with a predetermined data size and performing the steps of marshalling and compression only if the size of the data is greater than the predetermined data size.

7. The method according to claim 6, in which where the data size is smaller than the predetermined data size the data is one of: stored without compression on the cache; and compressed before being stored on the cache.

8. The method according to any preceding claim, in which the cache storing the compressed, encoded data is formed in data storage comprised in a server of the computer apparatus.

9. The method according to any preceding claim further comprising:
conveying the compressed, encoded data from the cache over a communications channel; uncompressing the conveyed data; and un-marshalling the conveyed data.

10. The method according to claim 9, in which the step of uncompressing the conveyed data is performed before the step of un-marshalling the conveyed data.

11. The method according to claim 9 or 10, in which the cache storing the uncompressed, un-marshalled data is formed in data storage comprised in a client apparatus of a distributed client-server architecture.

12. A computer program, which is at least one of embodied on a computer readable storage medium and carried on an electrical carrier signal, the computer program comprising computer executable code for causing computer apparatus to operate according to any one of the preceding claims.

13. A computer program according to claim 12, in which the computer readable storage medium comprises at least one of a record medium, computer memory and read-only memory.

14. Computer apparatus comprising a cache, the computer apparatus being operative to marshal data to provide encoded data, to compress the data and to store the compressed, encoded data in the cache.

15. A distributed client-server architecture comprising computer apparatus according to claim 14.
